# EUROPEAN PATENT APPLICATION

(11) **EP 4 401 305 A1**
(43) Date of publication of application: **17.07.2024**
(21) Application number: 22866177.3
(22) Date of filing: 07.06.2022
(51) Int. Cl.: H02S 20/00

(54) **PHOTOVOLTAIC MODULE SUPPORT, PHOTOVOLTAIC MODULE SUPPORTING ASSEMBLY AND PHOTOVOLTAIC POWER STATION**

(30) Priority: 10.09.2021 CN 202122201592 U
(71) Applicant: Sungrow FPV Sci. & Tech. Co., Ltd., Huainan, Anhui 232082 (CN)
(72) Inventor: ZHU, Zhendong, Huainan, Anhui 232082 (CN); WU, Weiwu, Huainan, Anhui 232082 (CN); WU, Hao, Huainan, Anhui 232082 (CN); MA, Tao, Huainan, Anhui 232082 (CN); WANG, Anbin, Huainan, Anhui 232082 (CN)
(74) Representative: Zacco Norway AS
(86) International application number: PCT/CN2022/097357
(87) International publication number: WO 2023/035701

(57) **Abstract**

The present invention discloses a photovoltaic module support, a photovoltaic module supporting assembly and a photovoltaic power station. The photovoltaic module support is a structural member formed by stamping and bending, and comprises a support body which is provided with a reinforcing groove, and/or a reinforcing protrusion, and/or a turning edge. The photovoltaic module support is the structural member formed by stamping and bending, and a raw material thereof is a metal plate or a metal coiled material, such that the material cost and the processing cost are effectively reduced in comparison with existing structural members made by cutting an aluminum profile, thereby reducing the cost of the whole photovoltaic module support. The structural member formed by stamping and bending is manufactured without height restrictions, thereby meeting the requirement for the height of the photovoltaic module support. The photovoltaic module support is provided with the reinforcing groove and the reinforcing protrusion, thereby effectively improving the strength of the whole photovoltaic module support.

## Description

This application claims the priority of the Chinese Patent Application No. 202122201592.1, titled "PHOTOVOLTAIC MODULE SUPPORT, PHOTOVOLTAIC MODULE SUPPORTING ASSEMBLY AND PHOTOVOLTAIC POWER STATION", filed on September 10, 2021 with the China National Intellectual Property Administration, which is incorporated herein by reference in its entirety.

### FIELD

The present application relates to the technical field of electrical equipment, and in particular to a photovoltaic module support, a photovoltaic module supporting assembly and a photovoltaic power station.

### BACKGROUND

At present, a photovoltaic module is supported by a supporting assembly. The supporting assembly has supports that are usually made of aluminum profiles by cutting, which results in a high cost of the supports.

In addition, the increasing size of the photovoltaic module requires a greater height of the support. It is difficult or impossible for the conventional technology and equipment to process aluminum profiles exceeding a predetermined height for meeting the requirements.

In summary, those skilled in the art is interested in the design of the photovoltaic module support to reduce the cost and to meet the requirements of the height..

### SUMMARY

In view of this, an object of the present application is to provide a photovoltaic module support to reduce the cost and meet the requirements to the height of the photovoltaic module support. Another object of the present application is to provide a photovoltaic module supporting assembly including the above photovoltaic module support and a photovoltaic power station including the above photovoltaic module supporting assembly.

In order to achieve the above objects, the present application provides the following solutions.

A photovoltaic module support is a structural member formed by stamping and bending, and includes a support body which is provided with a reinforcing groove, and/or a reinforcing protrusion, and/or a hemming.

In an embodiment, at least one of the reinforcing grooves is arranged at at least one of bending corners of the support body.

In an embodiment, at least one of the reinforcing grooves is arranged at a non-bending corner area of the support body.

In an embodiment, at least one of the reinforcing protrusions is arranged at at least one of bending corners of the support body.

In an embodiment, at least one of the reinforcing protrusions is arranged at a non-bending corner area of the support body.

In an embodiment, the hemming includes a limiting hemming fixedly connected with the support body, and the limiting hemming is configured for limiting a frame of a photovoltaic module.

In an embodiment, the support body includes a first mounting plate fixedly connected with the photovoltaic module, a second mounting plate fixedly connected with a supporting member, and a connecting plate fixedly connecting the first mounting plate and the second mounting plate.

In an embodiment, the first mounting plate is provided with a first mounting hole for fixing the photovoltaic module, and/or the second mounting plate is provided with a second mounting hole for fixing the supporting member.

In an embodiment, the first mounting plate and the second mounting plate are located at a same side of the connecting plate.

In an embodiment, the first mounting plate and the second mounting plate are located at two opposite sides of the connecting plate respectively.

In an embodiment, the photovoltaic module support further includes a third mounting plate for being fixedly connected with the supporting member, and the third mounting plate is fixedly connected with the first mounting plate by an auxiliary connecting plate.

In an embodiment, the hemming includes a reinforcing hemming fixedly connected with the support body, and the reinforcing hemming is located at a side portion of the support body.

In an embodiment, the reinforcing hemming has an opening and/or a welding portion that are located at at least one of bending corners of the support body.

The photovoltaic module support provided according to the present application is a structural member formed by stamping and bending, and a raw material thereof is a metal plate or a metal coiled material, so that the material cost and the processing cost are effectively reduced in comparison with conventional structural members made by cutting an aluminum profile, thereby reducing the cost of the whole photovoltaic module support. The structural member formed by stamping and bending is manufactured without restrictions to height, thereby meeting the requirement to the height of the photovoltaic module support. The photovoltaic module support is provided with the reinforcing groove and the reinforcing protrusion, thereby effectively improving the strength of the whole photovoltaic module support.

Based on the photovoltaic module support described above, a photovoltaic module supporting assembly is further provided according to the present application. The photovoltaic module supporting assembly includes a supporting member and a plurality of supports fixed to the supporting member, where at least one of the supports is the photovoltaic module support above.

Based on the photovoltaic module support described above, a photovoltaic module supporting assembly is further provided according to the present application. The photovoltaic module supporting assembly includes a supporting member, and a plurality of front supports and a plurality of rear supports both fixed to the supporting member; where the plurality of front supports are configured for supporting an end of the photovoltaic module that is located at a lower level, and the plurality of rear supports are configured for supporting an end of the photovoltaic module that is located at a lower level, at least one of the plurality of front supports is the photovoltaic module support above, and/or at least one of the plurality of rear supports is the photovoltaic module support above.

Based on the photovoltaic module supporting assembly described above, a photovoltaic power station is provided according to the present application. The photovoltaic power station includes a supporting assembly, and a photovoltaic module fixed to the supporting assembly, where the supporting assembly is the photovoltaic module supporting assembly as described above.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawings without any creative efforts.

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawings without any creative efforts.
FIG. 1 is a schematic view showing a structure of a photovoltaic module support provided according to an embodiment of the present application;
FIG. 2 is a schematic view of the structure shown in FIG. 1 from another perspective;
FIG. 3 is a schematic view showing a structure of a photovoltaic module support provided according to an embodiment of the present application;
FIG. 4 is a schematic view of the structure shown in FIG. 3 from another perspective;
FIG. 5 is a schematic view showing a structure of a photovoltaic module support provided according to an embodiment of the present application;
FIG. 6 is a schematic view of the structure shown in FIG. 5 from another perspective;
FIG. 7 is a schematic view showing a structure of a photovoltaic module support provided according to an embodiment of the present application;
FIG. 8 is a schematic view of the structure shown in FIG. 7 from another perspective;
FIG. 9 is a schematic view showing a structure of a photovoltaic module support provided according to an embodiment of the present application;
FIG. 10 is a schematic view of the structure shown in FIG. 9 from another perspective;
FIG. 11 is a schematic view showing a structure of a photovoltaic module supporting assembly provided according to an embodiment of the present application;
FIG. 12 is an enlarged view of portion A in FIG. 11;
FIG. 13 is an enlarged view of portion B in FIG. 11;
FIG. 14 is a schematic view showing another structure of a photovoltaic module supporting assembly provided according to an embodiment of the present application;
FIG. 15 is a partial enlarged view of the structure shown in FIG. 14;
FIG. 16 is a partial enlarged view of the structure shown in FIG. 14.

### DETAILED DESCRIPTION OF THE EMBODIMENTS

Technical solutions of embodiments of the present application are clearly and completely described hereinafter in conjunction with the drawings of the embodiments of the present application. Apparently, the embodiments described in the following are only some embodiments of the present application, rather than all embodiments. Based on the embodiments in the present application, all of the other embodiments which are obtained by those skilled in the art without any creative work fall within the protection scope of the present application.

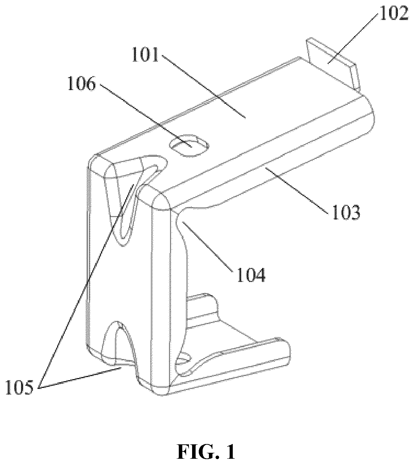

As shown in FIG. 1 to FIG. 10, a photovoltaic module support provided according to an embodiment of the present application is a structural member formed by stamping and bending, and the photovoltaic module support includes a support body 101. It can be understood that the support body 101 is configured to fixedly connect a supporting member and a photovoltaic module 300. The support body 101 is provided with a reinforcing groove 105 and/or a reinforcing protrusion 111 and/or a hemming.

It should be noted that the reinforcing groove 105 is in a structure of a groove and the reinforcing protrusion 111 is in a structure of a convex when viewed the support body 101 from a perspective, and the reinforcing groove 105 may be in the structure of a convex and the reinforcing protrusion 111 may be in the structure of a groove when viewed the support body 101 from another perspective. The reinforcing groove 105 and the reinforcing protrusion 111 are both stamped and bent structures. The specific position and shape of the hemming are designed based on actual situation, which is not limited in this embodiment.

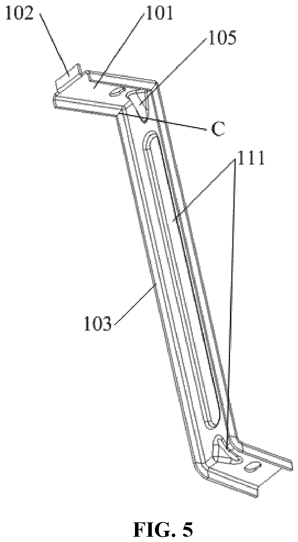

In the above-mentioned photovoltaic module support, the support body 101 may be provided with both the reinforcing groove 105 and the reinforcing protrusion 111, as shown in FIG. 5 to FIG. 10. Alternatively, the support body 101 may be only provided with the reinforcing groove 105, as shown in FIG. 1 to FIG. 4. Alternatively, the support body 101 may be only provided with the reinforcing protrusion 111.

The photovoltaic module support provided according to an embodiment of the present application is a structural member formed by stamping and bending, and raw material is a metal plate or a metal coil, which effectively reduces the material cost and the processing cost compared with the structural member made by cutting aluminum profiles in the conventional technology, thereby reducing the cost of the whole photovoltaic module support. The manufacture of the structural member formed by stamping and bending is not limited by height, which can meet the requirements to the height of photovoltaic module support. The photovoltaic module support described above is provided with the reinforcing groove 105 and the reinforcing protrusion 111, which effectively improves the strength of the whole photovoltaic module support.

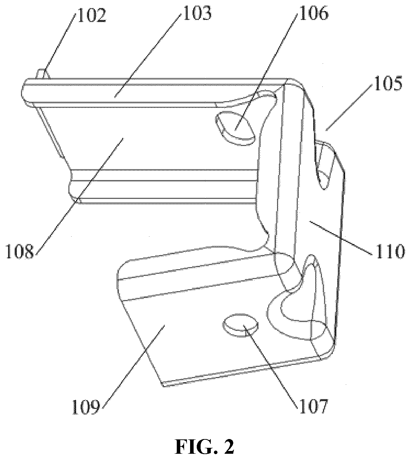

In the above-mentioned photovoltaic module support, positions of the reinforcing groove 105 and the reinforcing protrusion 111 located in are selected based on actual needs. In particular, since the strength of a bending corner of the support body 101 is weak, at least one of the reinforcing grooves 105 is arranged at least one of the bending corners of the support body 101. In particular, all of the reinforcing grooves 105 can be arranged at the bending corners of the support body 101, respectively, as shown in FIG. 1 and FIG. 2. Optionally, one reinforcing groove 105 may be arranged at one bending corner of the support body 101, as shown in FIG. 5 to FIG. 10.

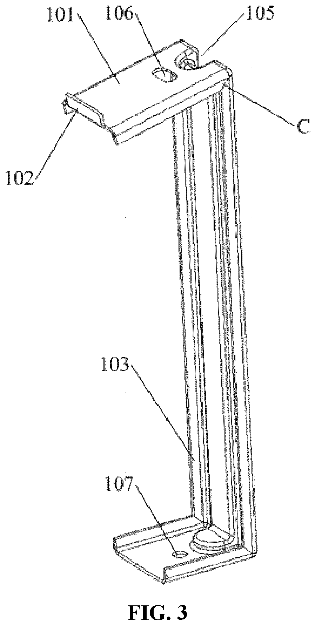

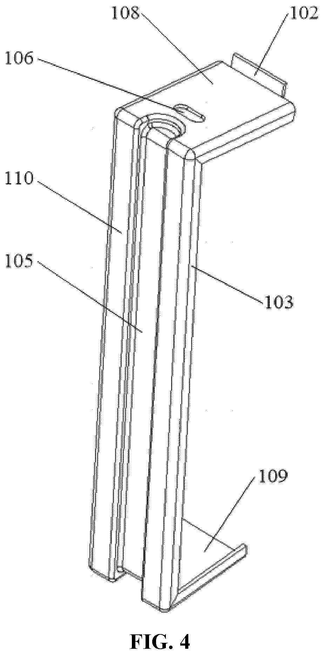

Of course, the at least one reinforcing grooves 105 can be arranged at a non-bending corner area of the support body 101, as shown in FIG. 3 and FIG. 4.

In order to greatly improve the strength, at least one of the reinforcing grooves 105 may be arranged at the non-bending corner area of the support body 101, and at least one of the reinforcing grooves 105 may be arranged at the at least one of the bending corners of the support body 101, as shown in FIG. 3 and FIG. 4.

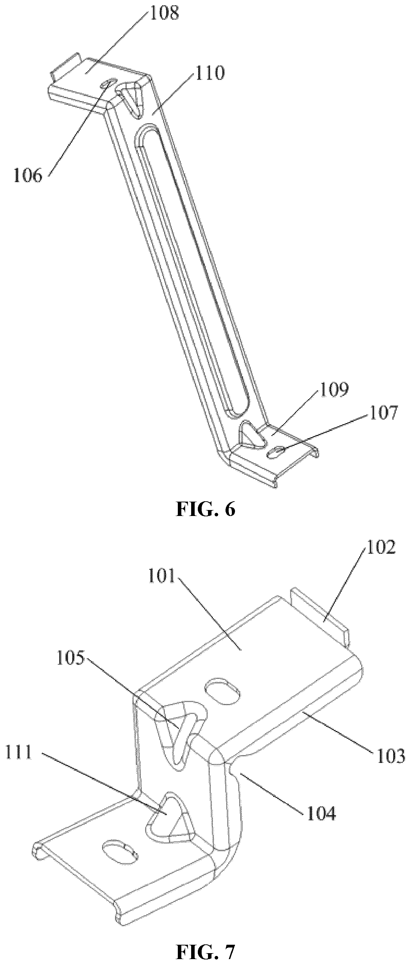

Accordingly, at least one of the reinforcing protrusions 111 may be arranged at the at least one of the bending corners of the support body 101, as shown in FIG. 5 to FIG. 10. Alternatively, at least one of the reinforcing protrusions 111 may be arranged at the non-bending corner area of the support body 101, as shown in FIG. 5 and FIG. 6. In order to improve the strength to a great extent, at least one of the reinforcing protrusions 111 may be arranged at at least one of the bending corners of the support body 101, and at least one of the reinforcing protrusions 111 may be arranged at the non-bending corner area of the support body 101, as shown in FIG. 5 and FIG. 6.

It should be noted that the above-mentioned non-bending corner area refers to an area of the support body 101 at which the bending corner is not located.

The shapes, numbers and sizes of the reinforcing grooves 105 and the reinforcing protrusions 111 are selected based on actual needs, which will not be limited in this embodiment.

For convenience of the mounting, the hemming described above includes a limiting hemming 102 fixedly connected with the support body 101, and the limiting hemming 102 is configured for limiting a frame of the photovoltaic module 300.

It should be noted that the support body 101 is integrally formed with the limiting hemming 102 by stamping and bending. The limiting hemming 102 may be a structure formed by stamping and bending. The limiting hemming 102 is arranged at one end of the support body 101 for connecting with the photovoltaic module 300.

In a process of mounting the photovoltaic module 300, the above photovoltaic module support limit the frame of the photovoltaic module 300 by the limiting hemming 102, which restricts a moving direction of the photovoltaic module 300, thus facilitating the fixed connection between the photovoltaic module 300 and the photovoltaic module support and improving the supporting stability of the photovoltaic module support.

In an actual application process, the size and shape of the limiting hemming 102 are selected based on actual needs, which is not limited in this embodiment.

In the photovoltaic module support described above, the support body 101 is configured to fixedly connect the supporting member and the photovoltaic module 300. In particular, the support body 101 may include a first mounting plate 108 fixedly connected with the photovoltaic module 300, a second mounting plate 109 fixedly connected with the supporting member, and a connecting plate 110 fixedly connected the first mounting plate 108 and the second mounting plate 109.

It should be noted that the support body 101 described above may be a stamped bent member, which may be selected based on actual needs. The first mounting plate 108 is located at one end of the connecting plate 110, and the second mounting plate 109 is located at the other end of the connecting plate 110.

A joint portion between the first mounting plate 108 and the connecting plate 110 is at a bending corner, and a joint portion between the second mounting plate 109 and the connecting plate 110 is also at a bending corner. In this case, the support body 101 has two bending corners, and the non-bending corner area of the support body 101 refers to an area at which said two bending corners are not located.

In order to simplify the structure and facilitate the manufacturing, the first mounting plate 108, the second mounting plate 109 and the connecting plate 110 may be configured as flat plates. Also, it is possible that the first mounting plate 108, the second mounting plate 109 and the connecting plate 110 are configured to have other shapes, which will not be limited to the above.

In the above-mentioned photovoltaic module support, the first mounting plate 108 may be provided with the first mounting hole 106 for fixing the photovoltaic module 300, so as to facilitate the fixed connection of the photovoltaic module 300. In particular, the first mounting plate 108 is fixedly connected with the photovoltaic module 300 through a pressing block 400, where one end of the pressing block 400 is fixed to the photovoltaic module 300, and the other end of the pressing block 400 is fixedly connected with the first mounting plate 108 by a first fastener, which extends through the first mounting hole 106. The first mounting hole 106 is a punching hole.

Accordingly, the second mounting plate 109 may be provided with a second mounting hole 107 for fixing the supporting member. In particular, the second mounting plate 109 is configured to be fixedly connected with the supporting member through a second fastener, which extends through the second mounting hole 107. The second mounting hole 107 is a punching hole.

In order to facilitate disassembly, the first fastener and the second fastener are both threaded connecting members.

In the above-mentioned photovoltaic module support, a length of the first mounting plate 108 may be equal or unequal to that of the second mounting plate 109, which may be determined based on actual needs. In case that the support body 101 described above is provided with the limiting hemming 102, the limiting hemming 102 and the first mounting plate 108 are fixedly connected with each other. In that case, the length of the first mounting plate 108 is preferably greater than the length of the second mounting plate 109, as shown in FIG. 1 to FIG. 8.

In the above-mentioned photovoltaic module support, an included angle between the first mounting plate 108 and the connecting plate 110 may be an acute angle, a right angle or an obtuse angle, and the included angle between the second mounting plate 109 and the connecting plate 110 may be an acute angle, a right angle or an obtuse angle, which may also be selected based on actual needs.

The relative positions of the first mounting plate 108, the second mounting plate 109 and the connecting plate 110 are arranged based on actual needs. In particular, the first mounting plate 108 and the second mounting plate 109 may be located at the same side of the connecting plate 110, as shown in FIG. 1 to FIG. 4. In this case, the support body 101 is U-shaped, and the length of the first mounting plate 108 may be equal or unequal to that of the second mounting plate 109 1.

In use, the first mounting plate 108 and the second mounting plate 109 may be located at opposite sides of the connecting plate 110, as shown in FIG. 5 to FIG. 10. At this time, the support body 101 may be Z-shaped.

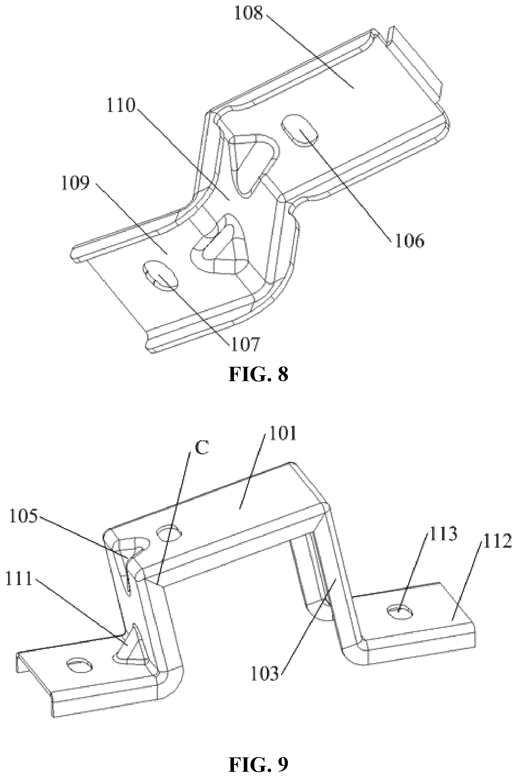

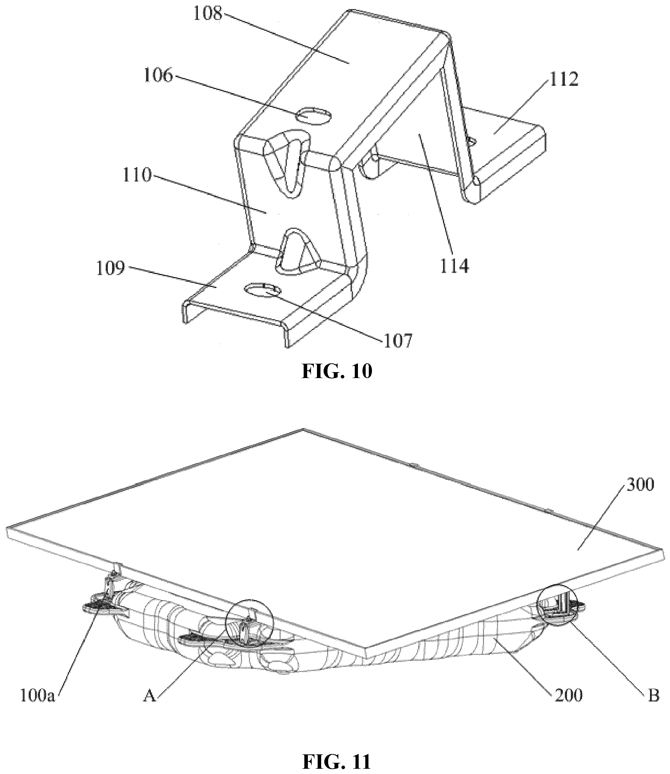

In order to improve the stability, the photovoltaic module support further includes a third mounting plate 112 for being fixedly connected with the supporting member, and the third mounting plate 112 is fixedly connected with the first mounting plate 108 through an auxiliary connecting plate 114, as shown in FIG. 9 and FIG. 10.

It can be understood that the connecting plate 110 is located at one end of the first mounting plate 108, the auxiliary connecting plate 114 is located at the other end of the first mounting plate 108, and the second mounting plate 109 and the third mounting plate 112 are located at the same side of the first mounting plate 108.

For the convenience of fixing, the third mounting plate 112 may be provided with a third mounting hole 113, and the third mounting plate 112 is fixedly connected with the supporting member through a third fastener, which extends through the third mounting hole 113.

In use, the second mounting plate 109 may be located at the side of the connecting plate 110 away from the auxiliary connecting plate 114, or at the side of the connecting plate 110 toward the auxiliary connecting plate 114. The third mounting plate 112 is located at the side of the auxiliary connecting plate 114 away from the connecting plate 110, or at the side of the auxiliary connecting plate 114 toward the connecting plate 110.

For convenience of the mounting, the second mounting plate 109 may be located on the side of the connecting plate 110 away from the auxiliary connecting plate 114, and the third mounting plate 112 may be located on the side of the auxiliary connecting plate 114 away from the connecting plate 110, as shown in FIG. 9 and FIG. 10.

In order to further improve the strength, the hemming described above includes a reinforcing hemming 103 fixedly connected with the support body 101, and the reinforcing hemming 103 is located at a side portion of the support body 101. In particular, the reinforcing hemming 103 is located at one side of the support body 101 or at both sides of the support body 101. It can be understood that the reinforcing hemming 103 is a stamping and bending structure.

The size of the reinforcing hemming 103 described above is selected based on actual needs. In order to effectively improve the strength, the reinforcing hemming 103 may extend to the bending corner of the support body 101. Further, the reinforcing hemming 103 extends from one end of the support body 101 to the other end of the support body 101.

In order to facilitate the formation of the reinforcing hemming 103 at the bending corner, the reinforcing hemming 103 has an cut 104 and/or a welding portion C at the at least one of the bending corners of the support body 101.

In particular, for the case that the reinforcing hemming 103 has an cut 104 at the at least one of the bending corners of the support body 101, it means that before making the reinforcing hemming 103, a crack-preventing notch is first made at the site of the plate where is to form the bent corner, then the reinforcing hemming 103 is formed by punching and bending, and then the cut 104 is formed by punching and bending. After manufacturing, the crack-preventing notch is formed as said cut 104. For the case that the reinforcing hemming 103 has a welding portion C in the at least one of the bending corners of the support body 101, firstly, the crack-preventing notch is made at the site of the plate where is to form the bent corner, then the reinforcing hemming 103 is formed by punching and bending, and then the welding portion C is formed by punching and bending, where the two reinforcing hemmings 103 at the crack-preventing notch are fixedly connected by welding. After manufacturing, the original crack-preventing notch disappears.

In use, the reinforcing hemming 103 may also be made in other ways, which is not limited in this embodiment.

Based on the photovoltaic module support provided according to the above embodiment, a photovoltaic module supporting assembly is further provided according to the embodiment, which includes a supporting member with a support fixed to the supporting member, where at least one of the supports is the photovoltaic module support described in the above embodiment.

It should be noted that the supporting member described above is a floating body 200, which can be arranged in the water, and the support is fixed to the floating body 200. Alternatively, the supporting member includes a floating body 200 and a supporting beam 500 fixedly connected with the floating body 200, and in this case, the support may be fixed to the supporting beam 500.

Since the photovoltaic module support provided according to the above embodiment has the above technical effects, and the photovoltaic module supporting assembly includes the above photovoltaic module support, the above photovoltaic module supporting assembly also has corresponding technical effects, which will not be described in detail here.

Based on the photovoltaic module support provided according to the above embodiment, a photovoltaic module supporting assembly is further provided according to the present application, which includes a supporting member with a front photovoltaic module support 100a and a rear photovoltaic module support 100b both fixed to the supporting member. The front photovoltaic module support 100a is configured to support an end of the photovoltaic module 300 that is positioned at lower level, and the rear photovoltaic module support 100b is configured to support an end of the photovoltaic module 300 that is positioned at higher level. At least one of the front photovoltaic module support 100a is a photovoltaic module support described in the above embodiment, and/or at least one of the rear photovoltaic module support 100b is a photovoltaic module support described in the above embodiment.

It should be noted that the supporting member is a floating body 200. In that case, both of the front photovoltaic module support 100a and the rear photovoltaic module support 100b are fixed to the floating body 200. Alternatively, the supporting member includes a floating body 200 and a supporting beam 500 fixedly connected with the floating body 200. In this case, it is optional that both of the front photovoltaic module support 100a and the rear photovoltaic module support 100b are fixed to the supporting beam 500.

Since the photovoltaic module support provided according to the above embodiment has the above technical effects, and the photovoltaic module supporting assembly includes the above photovoltaic module support, the above photovoltaic module supporting assembly also has corresponding technical effects, which will not be described in detail here.

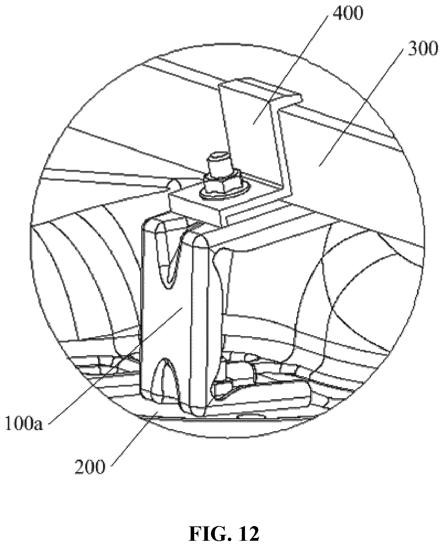

As shown in FIG. 11 to FIG. 13, the supporting member is a floating body 200, and both of the front photovoltaic module support 100a and the rear photovoltaic module support 100b are fixed to the floating body 200, and any of the front photovoltaic module support 100a and the rear photovoltaic module support 100b is the photovoltaic module support as described in the above embodiment. Specifically, the front photovoltaic module support 100a is a photovoltaic module support shown in FIG. 1 and FIG. 2, and the rear photovoltaic module support 100b is a photovoltaic module support shown in FIG. 3 and FIG. 4.

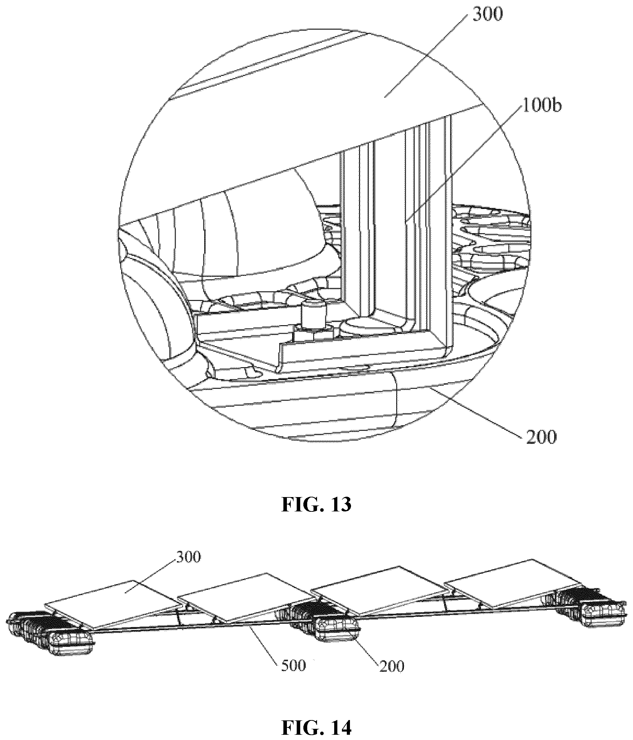

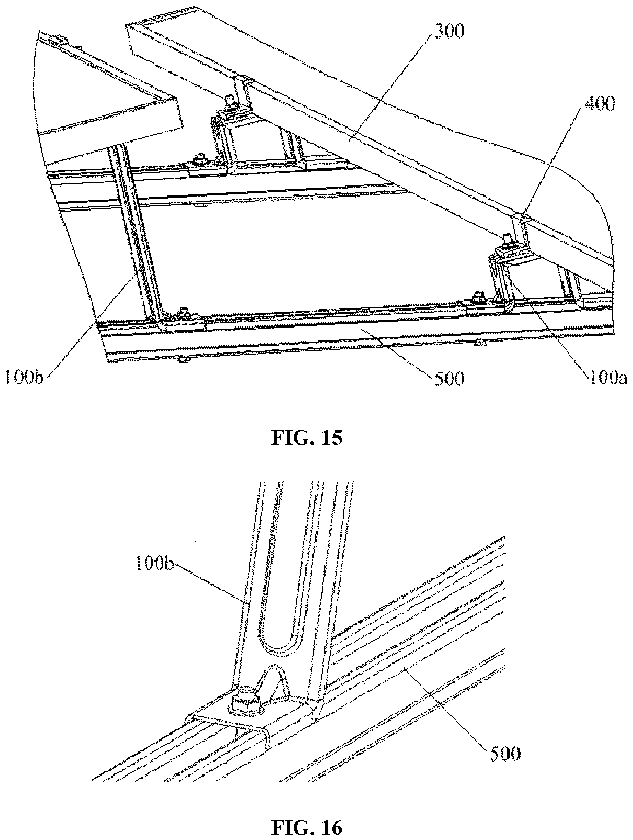

As shown in FIG. 14 to FIG. 16, the supporting member includes a floating body 200 and a supporting beam 500 fixedly connected with the floating body 200, and both of the front photovoltaic module support 100a and the rear photovoltaic module support 100b are fixed to the supporting beam 500. Both the front photovoltaic module support 100a and the rear photovoltaic module support 100b are the photovoltaic module support described in the above embodiment. Specifically, the front photovoltaic module support 100a is the photovoltaic module support shown in FIG. 7 and FIG. 8, or the front photovoltaic module support 100a is the photovoltaic module support shown in FIG. 9 and FIG. 10. In addition, the rear photovoltaic module support 100b is the photovoltaic module support shown in FIG. 5 and FIG. 6. In that case, the reinforcing hemming 103 of the photovoltaic module support and the support beam 500 are fitted with each other in a position-limiting way, so as to fixedly connect the photovoltaic module support and the support beam 500.

Based on the photovoltaic module supporting assembly provided in the above embodiment, a photovoltaic power station is further provided according to the present application, which includes: a supporting assembly with a photovoltaic module 300 fixed to the supporting assembly, where the supporting assembly is the photovoltaic module supporting assembly described in the above embodiment.

Since the photovoltaic module supporting assembly provided in the above embodiment has the above technical effects, and the photovoltaic power station includes the above photovoltaic module supporting assembly, the above photovoltaic power station also has corresponding technical effects, which will not be described in detail here.

The foregoing descriptions of the disclosed embodiments enable a person skilled in the art to implement or use the present application. Various modifications to these embodiments are obvious to a person skilled in the art. The general principles defined in the present application may be implemented in other embodiments without departing from the spirit and scope of the present application. Therefore, the present application is not limited to these embodiments illustrated herein, but shall conform to the broadest scope consistent with the principle and novel features disclosed herein.

## Claims

1. A photovoltaic module support, wherein the photovoltaic module support is a structural member formed by stamping and bending, and comprises a support body (101), wherein the support body (101) is provided with a reinforcing groove (105), and/or a reinforcing protrusion (111), and/or a hemming.

2. The photovoltaic module support according to claim 1, wherein the number of the reinforcing grooves (105) is at least one, which is arranged at at least one of bending corners of the support body (101).

3. The photovoltaic module support according to claim 1, wherein the number of the reinforcing grooves (105) is at least one, which is arranged at a non-bending corner area of the support body (101).

4. The photovoltaic module support according to claim 1, wherein the number of the reinforcing protrusions (111) is at least one, which is arranged at at least one of bending corners of the support body (101).

5. The photovoltaic module support according to claim 1, wherein the number of the reinforcing protrusions (111) is at least one, which is arranged at a non-bending corner area of the support body (101).

6. The photovoltaic module support according to claim 1, wherein the hemming comprises a limiting hemming (102) fixedly connected with the support body (101), and the limiting hemming (102) is configured for limiting a frame of a photovoltaic module (300).

7. The photovoltaic module support according to claim 1, wherein the support body (101) comprises a first mounting plate (108) fixedly connected with a photovoltaic module (300), a second mounting plate (109) fixedly connected with a supporting member, and a connecting plate (110) fixedly connecting the first mounting plate (108) and the second mounting plate (109).

8. The photovoltaic module support according to claim 7, wherein the first mounting plate (108) is provided with a first mounting hole (106) for fixing the photovoltaic module (300), and/or the second mounting plate (109) is provided with a second mounting hole (107) for fixing the supporting member.

9. The photovoltaic module support according to claim 7, wherein the first mounting plate (108) and the second mounting plate (109) are located at a same side of the connecting plate (110).

10. The photovoltaic module support according to claim 7, wherein the first mounting plate (108) and the second mounting plate (109) are located at two opposite sides of the connecting plate (110), respectively.

11. The photovoltaic module support according to claim 7, further comprising a third mounting plate (112) for fixedly connecting with the supporting member, wherein the third mounting plate (112) is fixedly connected with the first mounting plate (108) by an auxiliary connecting plate (114).

12. The photovoltaic module support according to any one of claims 1 to 11, wherein the hemming comprises a reinforcing hemming (103) fixedly connected with the support body (101), and the reinforcing hemming (103) is located at a side portion of the support body (101).

13. The photovoltaic module support according to claim 12, wherein the reinforcing hemming (103) has an opening (104) and/or a welding portion (C) that are located at at least one of bending corners of the support body (101).

14. A photovoltaic module supporting assembly, comprising: a supporting member and a plurality of supports fixed to the supporting member, wherein at least one of the plurality of the supports is the photovoltaic module support according to any one of claims 1 to 13.

15. A photovoltaic module supporting assembly, comprising: a supporting member, and a plurality of front supports (100a) and a plurality of rear supports (100b) both fixed to the supporting member; wherein the plurality of front supports (100a) are configured for supporting an end of a photovoltaic module (300) that is positioned at a lower level, and the plurality of rear supports (100b) are configured for supporting an end of the photovoltaic module (300) that is positioned at a higher level,
wherein at least one of the plurality of front supports (100a) is the photovoltaic module support according to any one of claims 1 to 14, and/or at least one of the plurality of rear photovoltaic module supports (100b) is the photovoltaic module support according to any one of claims 1 to 13.

16. A photovoltaic power station, comprising: a supporting assembly, and a photovoltaic module (300) fixed to the supporting assembly, wherein the supporting assembly is the photovoltaic module supporting assembly according to claim 15 or 16.
